# EUROPEAN PATENT APPLICATION

(11) **EP 0 987 166 A1**
(43) Date of publication of application: **22.03.2000**
(21) Application number: 99118288.2
(22) Date of filing: 15.09.1999
(51) Int. Cl.: B62D 21/11, B60G 7/00, B21D 39/02, B21D 53/88, C22C 38/00, C22C 38/42

(54) **A structural element for a motor vehicle**

(30) Priority: 16.09.1998 IT TO980785
(71) Applicant: M.A.C. S.p.A., 10044 Pianezza (Torino) (IT)
(72) Inventor: Azzolini, Ezio, 10090 Sangano (Torino) (IT)
(74) Representative: Fioravanti, Corrado

(57) **Abstract**

A structural element for a motor vehicle, in particular, a frame (10) for supporting an engine and suspension units, is described. Two pressed sheet-steel half-shells (11, 12) with concave cross-sections are fitted together with their concave sides facing one another to define a closed cross-section and are fixed together along respective outwardly-projecting peripheral rims (13, 14). The half-shells are connected by seaming of their rims (13, 14).

## Description

The present invention relates to a structural element for a motor vehicle and, in particular, to a frame for supporting an engine and suspension units, of the type comprising a pair of pressed sheet-steel half-shells with concave cross-sections fitted together along a given axis with their concave sides facing one another to define a closed cross-section and fixed together along respective peripheral rims projecting outwardly and perpendicular to the given axis.

At the moment, the two superimposed half-shells of structural elements of this type are arranged for automatic welding by continuous seam welding along the perimeters of the half-shells.

The joining of the half-shells by welding has a first disadvantage owing to the fact that the welding often has non-homogeneous portions which require localized re-welding which is not always accepted by the vehicle manufacturer.

Moreover, the welds comprise minute cracks which, in time, may lead to localized breakages due to the dynamic stresses to which the structural element is subjected, particularly if it is a frame for supporting the engine and suspension units. In addition, the minute cracks in turn represent critical regions for corrosion.

Finally, the welding process is difficult to control from a qualitative point of view without considerable investment in control equipment.

The object of the present invention is to provide a load-bearing structural element for a motor vehicle which can prevent the problems mentioned above and which can be produced by a method of manufacture which leads to a reduction in costs in comparison with conventional solutions which provide for welding of the half-shells.

This object is achieved, according to the present invention, by means of a structural element of the type identified in the introductory portion of the description, characterized in that the half-shells are connected by seaming of their rims.

Further characteristics and advantages of the present invention will become clear in the course of the detailed description of an embodiment thereof, given with reference to the appended drawings provided by way of non-limiting example, in which:
Figure 1 is a general perspective view of a frame according to the present invention for supporting the engine and suspension units of a motor vehicle, and
Figure 2 is a cross-section taken on the line II-II of Figure 1, on an enlarged scale.

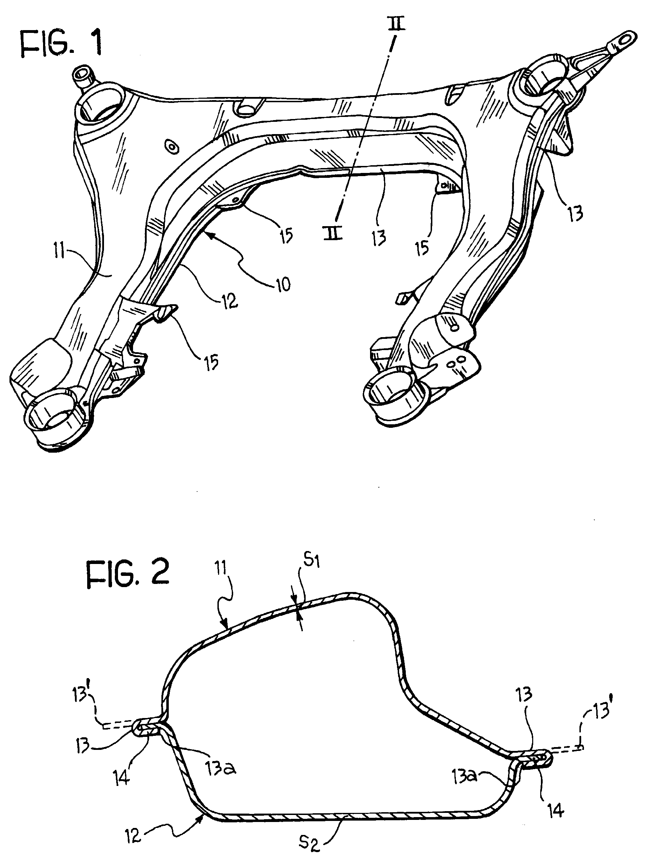

With reference initially to Figure 1, a structural element according to the present invention is generally indicated 10; in this embodiment, the structural element is a frame for supporting the engine and suspension units of a motor vehicle.

As also shown in Figure 2, the frame 10 is formed by joining together a pair of pressed sheet-steel half-shells 11, 12 having concave cross-sections. The two half-shells 11, 12 are fitted together and juxtaposed along an axis defined herein as vertical, with their concave sides facing one another so as jointly to define a closed cross-section (Figure 2).

The two half-shells 11, 12 have respective peripheral rims 13, 14 which project outwardly and horizontally; the rims 13 of the upper half-shell 11 have a width approximately twice that of the rims 14 of the lower half-shell 12 so that they can be turned over in a U-shaped arrangement around and beneath the rims 14 by a seaming operation, starting from an initial undeformed condition, indicated 13', in which these rims are initially straight.

The upper half-shell 11 is made of a sheet steel having a thickness s₁ which is less than the thickness s₂ of the sheet constituting the lower half-shell 12. This facilitates the bending of the rim 13 to be turned over; moreover, as can be understood from an observation of Figure 2, this configuration prevents water from collecting in the vicinity of the coupling rims since the end 13a of the rim 13 acts as a dripper for any water deposited on the outside of the upper half-shell 11.

The sheets used to form the half-shells 11, 12 and, in particular, the upper half-shell 11, the edge of which is bent into a U-shape, are made of a special high-strength steel such as, for example, that marketed by the firm Sollac with the reference DP 600. The use of this steel enables the thicknesses of the sheets to be reduced.

A steel of this type has the following chemical composition (% by weight):
- C: ≤ 0.100
- Mn: ≤ 0.800
- P: from 0.060 to 0.090
- S: ≤ 0.008
- Si: ≤ 450
- Cu: from 0.250 to 0.550
- Ni: ≤ 0.350
- Cr: from 0.450 to 0.650

With regard to the dimensions of the rims of a structural element which, as in the embodiment illustrated, has the functions of a front frame for supporting an engine and suspension units, the rims 14 of the lower half-shell 12 preferably have a width of between about 7 and about 9 mm which enables the two half-shells to be joined together firmly and renders the element composed thereof easily able to withstand the dynamic stresses to which such frames are normally subjected.

The seaming of the half-shells is performed substantially continuously along their peripheries, except for the points at which one of the two half-shells forms projecting portions such as, for example, those indicated 15, to constitute means for fixing to other parts and components of the motor vehicle.

Naturally, the principle of the invention remaining the same, the forms of embodiment and details of construction may be varied widely with respect to those described and illustrated purely by way of non-limiting example, without departing from the scope of the invention as defined in the appended claims.

## Claims

1. A structural element for a motor vehicle, in particular, a frame (10) for supporting an engine and suspension units, of the type comprising a pair of pressed sheet-steel half-shells (11, 12) with concave cross-sections fitted together along a given axis with their concave sides facing one another to define a closed cross-section and fixed together along respective peripheral rims (13, 14) projecting outwardly and perpendicular to the given axis, characterized in that the half-shells are connected by seaming of the rims (13, 14).

2. A structural element according to Claim 1, characterized in that the rims (13) of a first (11) of the half-shells are turned over onto the rims (14) of the second (12) of the half-shells.

3. A structural element according to Claim 1, of the type in which one, upper half-shell (11) is superimposed vertically on the other, lower half-shell (12), characterized in that the rims (13) of the upper half-shell (11) are turned over around and beneath the rims (14) of the lower half-shell (12).

4. A structural element according to Claim 1, characterized in that the first half-shell (11), the rims (13) of which are turned over, is made of sheet metal having a thickness (s1) less than the thickness (s2) of the sheet steel constituting the second half-shell (12).

5. A structural element according to Claim 1, characterized in that at least the first half-shell (11) is made of a steel which has the following chemical composition (% by weight):
C ≤ 0.100
Mn ≤ 0.800
P from 0.060 to 0.090
S ≤ 0.008
Si ≤ 450
Cu from 0.250 to 0.550
Ni ≤ 0.350
Cr from 0.450 to 0.650

6. A structural element according to Claim 4, characterized in that the sheet-steel constituting the first half-shell (11) has a thickness of about 1.5 mm and in that the sheet-steel constituting the second half-shell (12) has a thickness of about 2 mm.

7. A structural element according to Claim 1, characterized in that the rim (14) of the second half-shell (12) has a width of between about 7 and about 9 mm, measured in a direction perpendicular to that in which the rim (14) extends.

8. A structural element according to Claim 1, characterized in that the seaming is performed substantially continuously along the peripheries of the two half-shells (11, 12).
